# EUROPEAN PATENT SPECIFICATION

(11) **EP 3 173 892 B1**
(45) Date of publication and mention of the grant of the patent: **19.09.2018**
(21) Application number: 16152093.7
(22) Date of filing: 20.01.2016
(51) Int. Cl.: G05D 1/02

(54) **SYSTEM FOR DETERMINING A WORKING RANGE OF A SELF-PROPELLED EQUIPMENT**
SYSTEM ZUR BESTIMMUNG EINES ARBEITSBEREICHS EINER SELBSTANGETRIEBENEN VORRICHTUNG
SYSTÈME DE DÉTERMINATION D'UNE PLAGE DE FONCTIONNEMENT D'UN ÉQUIPEMENT AUTOMOTEUR

(30) Priority: 28.11.2015 CN 201510851617
(43) Date of publication of application: 31.05.2017
(73) Proprietor: Ningbo NGP Industry Co., Ltd., Ningbo, Zhejiang 315020 (CN)
(72) Inventor: LU, Lenny, Ningbo Zhejiang (CN); WANG, Shuang, Ningbo Zhejiang (CN); CHEN, Jianping, Ningbo Zhejiang (CN); MA, Shunjie, Ningbo Zhejiang (CN)
(74) Representative: Sun, Yiming

(56) References cited:
- EP-A1- 2 741 160
- EP-A2- 2 447 799
- US-A1- 2013 154 688

## Description

### TECHNICAL FIELD

The present invention relates to the automatic control field, and more specifically, to a system for determining a working range of a self-propelled equipment.

### BACKGROUND

Self-propelled equipments such as vacuum cleaning robots and mowing robots are very common in daily life. It is necessary to delimit a working range for every self-propelled equipment when in operation. Currently, there are many methods of setting the working range of the self-propelled equipment in the market, such as infrared, video identification, magnetic stripe, etc. These methods have some shortcomings in actual applications, for example, the infrared mehod is susceptible to sunlight and not suitable for long-term use outdoors, nor the video identification mehod, and the magnetic stripe mehod is costly and limited in the range of application and thus difficult to be generalized. With regard to each of the above methods, all of them have one thing in common, i.e. they cannot identify the inside and outside of the working range effectively. Therefore, it cannot be ensured reliably that the self-propelled equipment is in normal operation when it is inside its own working range and shuts down when it is outside its working range.

It can be known from the Ampere's rule that a magnetic field will be produced around a galvanized wire. By setting a closed-loop wire at the edge of the delimited working range and galvanizing the wire, magnetic field signals will be produced in areas inside and outside the working range delimited by the closed-loop wire, which are in opposite directions and whose intensities will decrease as the distance between the detection point and the wire increases. The self-propelled equipment can calculate its own position by detecting the magnetic field signals. In this method, the core issue is the design and optimization of the system, such that the system can operate reliably at low cost, with few materials and under easily achievable conditions. EP2741160A1 discloses a method for controlling a self-propelled lawn mower. The method involves sending electric signals as a signal with a predetermined pattern. A reception signal received in receiving coils is processed as a pattern by an evaluation unit of a self-propelled, rechargeable battery-powered tool. The reception signal is compared with a predetermined reference pattern. Information about a position of the coils within or outside an edge limiting wire and about a location of the tool on a surface is reproduced by a comparison result. A traveling direction of the tool is controlled by a control unit based on the result.

EP2447799A2 discloses a guide system for controllable vehicles. The system has an electric conductor i.e. ground cable, arranged outside a controllable vehicle. A power input is provided for the conductor. A reception unit is arranged at the vehicle for electromagnetic field of conductor current. A coding device produces a signal code in the current. A code recognition device for the code is arranged at the vehicle and connected with the reception unit. An evaluation device determines a local relationship of the sensor relative to the conductor from a current and/or voltage characteristic received from the conductor.

US2013/154688A1 discloses a method for detecting a working area and device therefor, whereby a method for detecting a position with respect to a mobile working machine includes providing a current signal in a boundary conductor, which surrounds the defined area, in accordance with a boundary signal that is provided, the boundary signal corresponding to a pseudo-accident signal; and receiving a detection signal of a magnetic field. The method further includes generating a reconstructed boundary signal from the detection signal; providing a reference signal which has a bit pattern corresponding to the boundary signal provided; carrying out a correlation method in order to determine a time-based correlation offset between the reference signal and the reconstructed boundary signal and a correlation value between the reference signal and the reconstructed boundary signal, which are displaced in relation to each other by the correlation offset determined; and determining a position inside or outside the defined area as a function of the correlation value determined.

### SUMMARY

For the problems in practical applications, the present invention proposes a system for determining a working range of a self-propelled equipment. The specific solution is as follows:
a system for determining a working range of a self-propelled equipment, comprising a signal generating device, a closed-loop wire for enclosing the working range, such that by galvanizing the wire, magnetic field signals will be produced in areas inside and outside the working range delimited by the closed-loop wire, and a self-propelled equipment, wherein the self-propelled equipment comprises a drive unit, a control unit and at least one magnetic field signal detection unit provided on its body, wherein the at least one magnetic field signal detection unit outputs a detection signal according to the intensity and direction of a detected magnetic field, wherein the control unit receives the detection signal and controls the self-propelled equipment to act according to the detection signal, wherein the signal generating device comprises a pulse signal generator, wherein the pulse signal generator provides pulse signals of fixed pulse width to the wire to produce pulse magnetic fields in the range enclosed by the wire, the pulse width of the pulse signals being less than a time interval between two of them, wherein the pulse signals are pseudo-random pulse signals and wherein the pseudo-random pulse signals are unipolar pulse sensors.

According to the above technical solution, the self-propelled equipment determines whether it is within the delimited working range by detecting the intensity and direction of the magnetic fields by the magnetic field signal detection unit. Since the pulse signals comprise a rising edge and a falling edge, the cycle of the detection signal output by the magnetic field signal detection unit will be larger than that of the pulse signals. In general, the cycle of the detection signal is twice that of the pulse signals. By employing unipolar pulse signals, a pulse width of which is less than a time interval between two of them, it is guaranteed that the detection signal generated by the magnetic field signal detection unit will not overlap, the detecting accuracy is thereby guaranteed.

Further, the magnetic field signal detection unit comprises a detection element for detecting the magnetic fields. The detection element responds to a variation between the magnetic fields in areas inside and outside the working range of the self-propelled equipment and outputs a signal generated by the signal detection unit.

Further, the detection element is inductive.

Further, the magnetic field signal detection unit comprises boundary line inside/outside detection modules for determining whether the self-propelled equipment is within its working range. The boundary line inside/outside detection modules respond to the signal generated by the signal detection unit and output the detection signal according to a waveform and amplitude of the signal generated by the signal detection unit.

Further, the boundary line inside/outside detection modules comprise two sets of comparators. The two sets of comparators are set to a different threshold respectively and used to compare the signal generated by the signal detection unit with the threshold to obtain the detection signal that is output to a main control unit (MCU) for signal processing.

Since the signal detection unit generated signal is similar to a sinusoidal signal which is divided into vertically symmetrical positive and negative half-cycles, by setting the thresholds of the two sets of comparators to different values, it can be inferred that a waveform of the signal detection unit generated signal is positive-then-negative if a positive half-cycle value is detected first, and negative-then-positive if a negative half-cycle value is detected first. Further, according to a circuit setting of the detection circuit, the MCU, through processing, determines where the self-propelled equipment is located, i.e. whether the self-propelled equipment is within its working range delimited by the wire. Then, the control unit controls a driving apparatus to act accordingly. The use of the two sets of comparators can reduce the signal processing burden of the MCU and enhance the efficiency of the control system.

Further, the detection signal enters the control unit via a gain controllable amplification circuit.

The size of the working range of the self-propelled equipment can be adjusted by the gain controllable amplification circuit.

Further, the pulse signal generator comprises a pseudo-random pulse signal generating module and a constant current module for fixing an amplitude of the pseudo-random pulse signals.

According to the above technical solution, it is guaranteed that the amplitude of the output pseudo-random pulse signals is constant.

Further, the pulse signal generator comprises a wire on/off detection module for detecting an on/off state of the wire (2). The wire on/off detection module comprises a receiving end coupled with the wire. The receiving end inputs wire pulse signals into the MCU which determines the on/off state of the wire by comparing the received wire pulse signal with the pulse signals generated by the pulse signal generator.

By the above arrangement, the stability and reliability of the system is enhanced.

The present invention enables a capability of detecting areas inside and outside the working range of the self-propelled equipment by employing a closed-loop wire to delimit the working range for the self-propelled equipment, applying the pseudo-random pulse signals on the wire, so that magnetic fields in opposite directions are produced, and detecting the intensity and direction of the magnetic fields by the self-propelled equipment. Thus, the present invention has a lower cost and higher reliability and is easier to implement than the prior art.

### BRIEF DESCRIPTION OF THE DRAWEINGS

Figure 1 is an overall schematic diagram of the present invention;
Figure 2 is a systematic block diagram of a self-propelled equipment according to the present invention;
Figure 3 is a principle block diagram of a system for determining a range according to the present invention;
Figure 4 is a circuit diagram showing the generation of the pseudo-random pulse signals according to the present invention;
Figure 5 shows the front-right (left) boundary line inside/outside detection module according to the present invention;
Figure 6 is a waveform effect schematic diagram according to the present invention (where the waveform 1-1 shows the random pulse signal of the signal generating device, and the corresponding waveform 1-2 shows the signal detection unit generated signal);
Figure 7 is a waveform effect schematic diagram of the detection features inside the wire according to the present invention (where the waveform 2-1 shows the random pulse signal of the signal generating device, and the corresponding waveform 2-2 shows the signal detection unit generated signal); and
Figure 8 is a waveform effect schematic diagram of the detection features outside the wire according to the present invention (where the waveform 3-1 shows the random pulse signal of the signal generating device, and the corresponding waveform 3-2 shows the signal detection unit generated signal).

Attached drawing signs: 1. signal generating device, 2. wire, 3. self-propelled equipment, 4. control unit, 5. magnetic field signal detection unit, 6. drive unit, 7. power supply unit, 8. pseudo-random pulse signal generating module, 9. constant current module, 10. wire on/off detection module, 11. magnetic field sensing element, 12. front-right (left) boundary line inside/outside detection module, 111. various sensor units, 112. man-machine interaction unit, 113. communication unit, 114. charge control unit, 115. sound alarming unit, 116. light alarming unit, 117. constant current unit, 118. wireless communication module, 119. main control unit (MCU), 120. signal detection unit generated signal, 121. first reference voltage output, 122. second reference voltage output.

### DETAILED DESCRIPTION

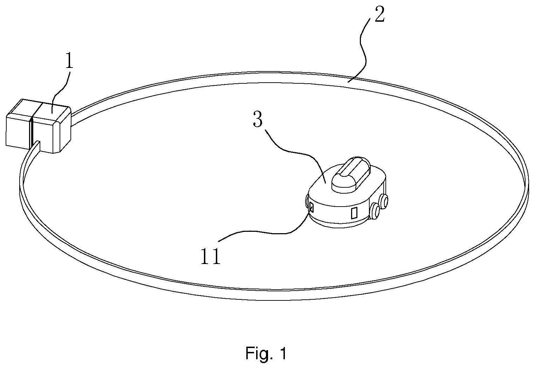

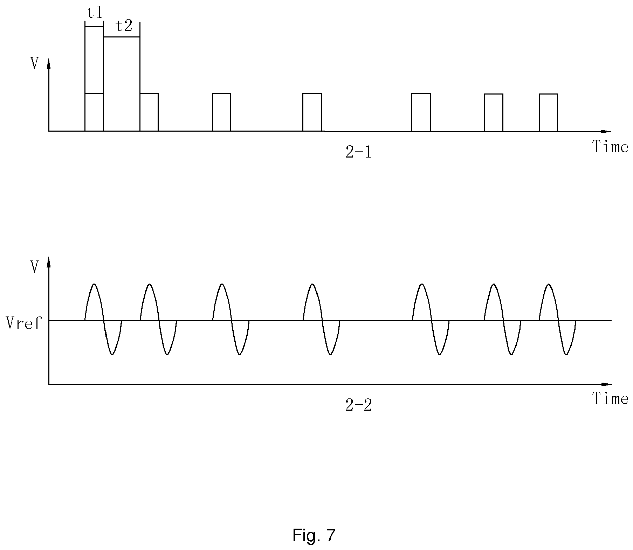

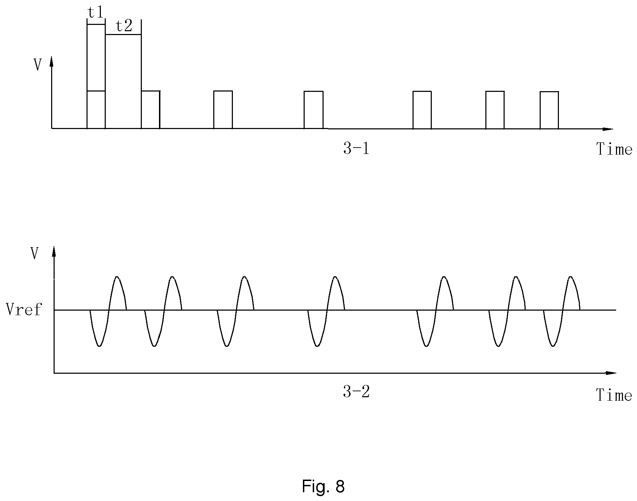

The present invention is further described with reference to figures 1-8.

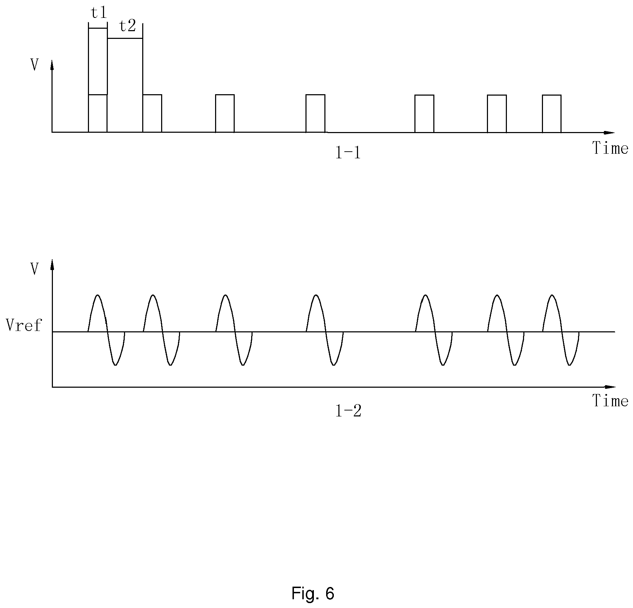

As shown in figures 1-3 and 6, a self-propelled equipment 3 and a system for determining a working range thereof comprise a signal generating device 1, a wire 2 for enclosing the working range and the self-propelled equipment 3. The self-propelled equipment 3 comprises a drive unit 6, a control unit 4 and at least one magnetic field signal detection unit 5 provided on its body. The magnetic field signal detection unit 5 outputs a detection signal according to the intensity and direction of a detected magnetic field. The control unit 4 receives the detection signal and controls the self-propelled equipment 3 to act according to the detection signal. The signal generating device 1 comprises a pulse signal generator which generates and outputs pulse signals for producing magnetic fields in areas inside and outside the working range of the self-propelled equipment 3. As shown in figure 6, a pulse width t1 of the pulse signals is less than the time interval t2 between two of them. The pulse signals are pseudo-random pulse signals. The self-propelled equipment 3 determines whether it is within the delimited working range by detecting the intensity and direction of the magnetic fields by the magnetic field signal detection unit 5. Since the pulse signals comprise a rising edge and a falling edge, the cycle of the detection signal output by the magnetic field signal detection unit 5 will be larger than that of the pulse signals. In general, the cycle of the detection signal is twice that of the pulse signals. By employing unipolar pulse signals, a pulse width of which is less than a time interval between two of them, it is guaranteed that the detection signals generated by the magnetic field signal detection unit 5 will not overlap, the detecting accuracy is thereby guaranteed. In the present design, the pulse width t1 is 100 us, and the time interval t2 between two of the pulse signals is 1.0-12.0 ms.

The magnetic field signal detection unit 5 comprises a detection element for detecting the magnetic fields. The detection element responds to a variation between the magnetic fields in areas inside and outside the working range of the self-propelled equipment 3 and outputs a signal detection unit generated signal.

Preferably, in the present design, the detection element is inductive.

As shown in figures 6-8, the signal detection unit generated signal is a waveform signal similar to a sinusoidal wave.

In detail, in the present design, the magnetic field signal detection unit 5 comprises boundary line inside/outside detection modules for determining whether the self-propelled equipment 3 is within its working range. The boundary line inside/outside detection modules respond to the signal detection unit generated signal and output the detection signal according to the waveform and amplitude of the signal detection unit generated signal.

In further detail, the boundary line inside/outside detection modules comprise two sets of comparators. The two sets of comparators are set to a different threshold respectively and used to compare the signal detection unit generated signal and the threshold to obtain the detection signal that is output to an MCU for signal processing. Since the signal detection unit generated signal is similar to a sinusoidal signal which is divided into positive and negative half-cycles (taking Vref=4.5V as an example), by setting the thresholds of the two sets of comparators to different values, it can be inferred that the waveform of the signal is positive-then-negative if a positive half-cycle value is detected first, and negative-then-positive if a negative half-cycle value is detected first. Further, according to a circuit setting of the detection circuit, the MCU, through processing, determines where the self-propelled equipment 3 is located, i.e. whether the self-propelled equipment 3 is within its working range delimited by the wire 2. Then, the control unit 4 controls a driving apparatus to act accordingly.

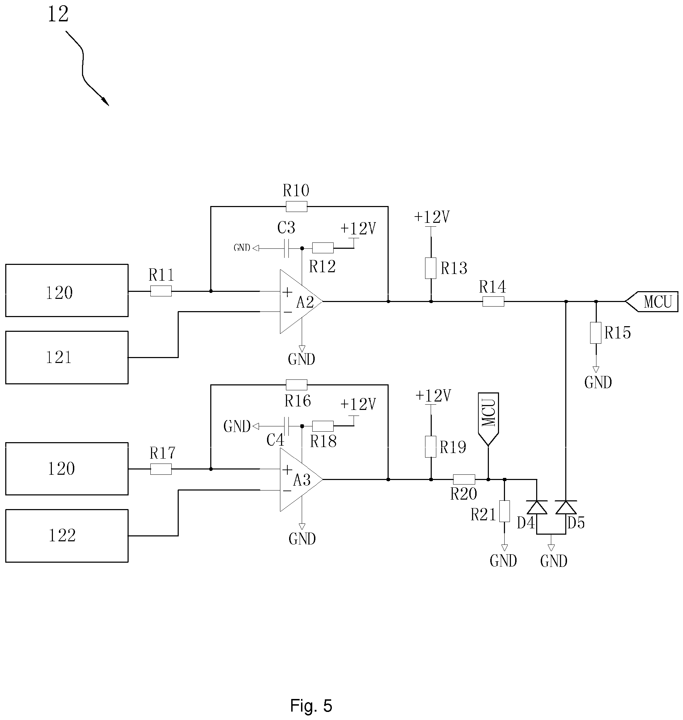

Optimally, the boundary line inside/outside detection modules comprise a front-right boundary line inside/outside detection module for determining whether the front-right side of the self-propelled equipment's body goes beyond its working range and a front-left boundary line inside/outside detection module for determining whether the front-left side of the self-propelled equipment's body goes beyond its working range. As shown in figure 5, the front-right (left) boundary line inside/outside detection module comprises two sets of comparators, which for ease of description are named the first comparator A2 and the second comparator A3, respectively. A forward input is coupled to the signal detection unit generated signal, and a reverse input end of the first comparator A2 is coupled with a first reference voltage output. In the present design, the output voltage of the first reference voltage output is 4.16V. A forward input is coupled to the signal detection unit generated signal, and a reverse input end of the second comparator A3 is coupled with a second reference voltage output. The output voltage of the second reference voltage output is 4.88V, at which point a reference voltage of the signal detection unit generated signal is 4.52V. When the waveform of the signal detection unit generated signal is positive-then-negative, the second comparator A3 outputs a high level signal firstly before the first comparator A2 outputs a low level signal; when the waveform of the signal detection unit generated signal is negative-then-positive, the first comparator A2 outputs a high level signal firstly before the second comparator A3 outputs a low level signal, with the signals output by the comparators being transferred into the MCU for processing. According to how the detection circuit has been set specifically, it can be determined whether the self-propelled equipment 3 is located inside or outside its working range. In order to enhance the detecting precision, the first and second comparators are both a hysteresis compactor as shown in figure 5, which can prevent external interference effectively.

Optimally, the detection signal enters the control unit 4 via a gain controllable amplification circuit to adjust the size of the working range of the self-propelled equipment.

In further detail, the pulse signal generator comprises a pseudo-random pulse signal generating module 8 and a constant current module 9 for fixing an amplitude of the pseudo-random pulse signals.

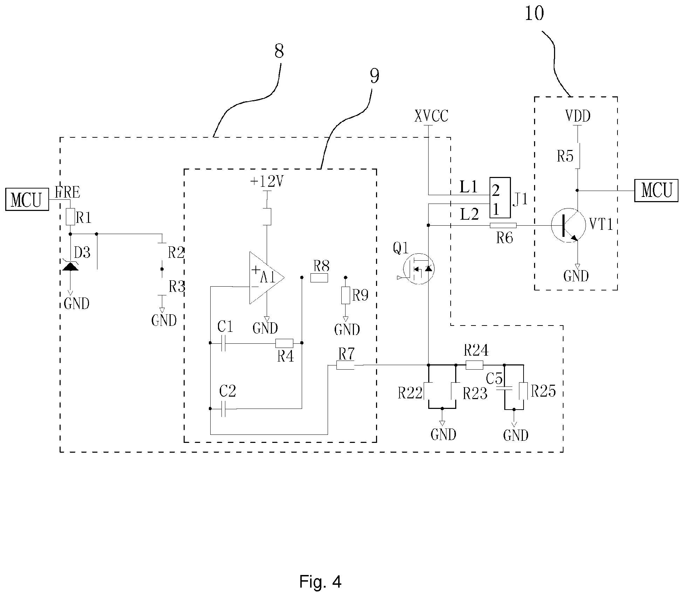

As shown in figure 4, in the present design, the pseudo-random pulse signal generating module 8 is an NMOS transistor connected in series in the wire 2. An output of the MCU is electrically connected with a gate of the NMOS transistor and provides a level control for a conductive channel width of the NMOS transistor so as to control the on/off of the wire 2 to produce respective pulse signals. In order to make the pulse signals more stable, a constant current module 9 is also provided in the pulse signal generator, as shown in figure 4, which comprises an operational amplifier circuit with negative feedback provided between the MCU and the NMOS transistor. A forward input is coupled with an output of the MCU, and a reverse input of the operational amplifier is coupled with the wire 2. As the current within the wire 2 decreases, the output of the constant current module 9 (i.e. the output voltage of the operational amplifier) increases, which widens the conductive channel of the NMOS transistor in width, thereby increasing the signal current within the wire 2. On the contrary, if the current within the wire 2 increases, the constant current module 9 outputs a voltage which narrows the conductive channel of the NMOS transistor in width, thereby decreasing the signal current within the wire 2. As such, the constant current control of the wire 2 can be achieved, which also stabilizes the amplitude of the signal pulses and reduces action errors of the self-propelled equipment 3.

Further optimally, in order to enhance the stability and reliability of the system, as shown in figure 4, the pulse signal generator comprises a wire on/off detection module for detecting an on/off state of the wire 2. The wire 2 on/off detection module comprises a receiving end coupled with the wire. The receiving end inputs wire pulse signals into the MCU which determines the on/off state of the wire by comparing the received wire pulse signals and the pulse signals generated by the pulse signal generator. The wire 2 on/off detection module as shown comprises an NPN triode, a collector of which is connected in series with a resistance and then grounded, and is coupled to an input of the MCU, an emitter of which is grounded and a base of which is electrically connected with the wire 2 through a resistance. In theory, when the on/off of the wire 2 is controlled by an output of the MCU, the level input to the input should be consistent with the on/off of the wire 2. Once a deviation occurs between the two, it can be determined that a failure happens to the on/off control of the wire 2 or the wire 2 itself.

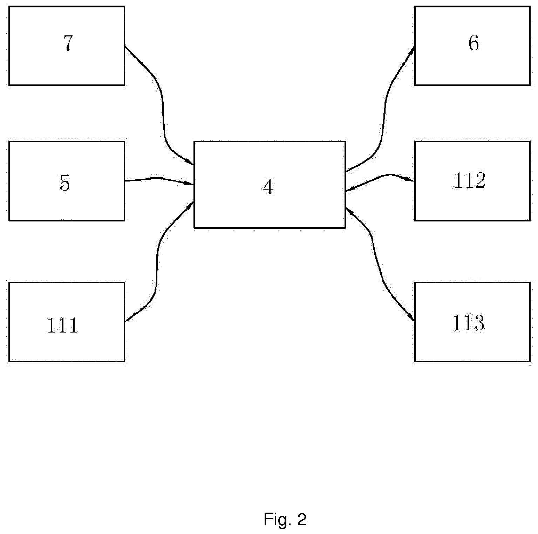

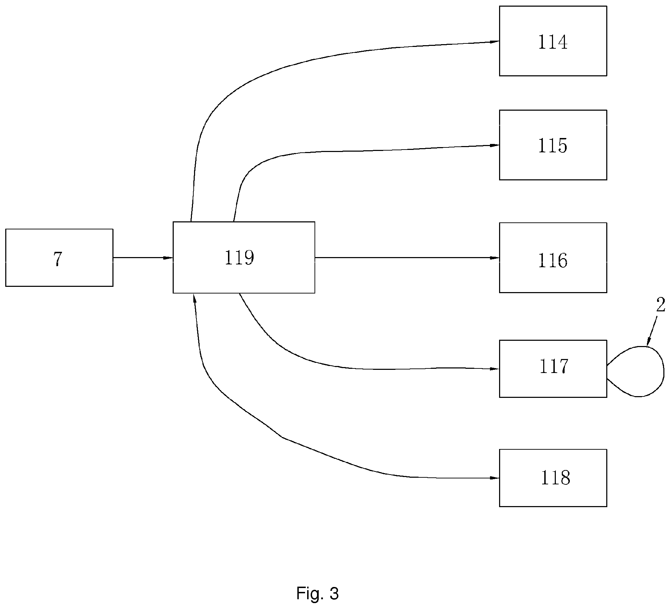

Further, as shown in figures 2 and 3, the present design also comprises alarming modules, i.e., a sound alarming unit and a light alarming unit, which when the self-propelled equipment 3 goes beyond its working range or the on/off control of the wire 2 or the wire 2 itself goes wrong, issue respective alarm signals. A communication unit is also comprised which is used to coordinate operations between the signal generating device 1 and the magnetic field signal detection unit 5. For example, when a magnetic field signal is output by the signal generating device 1, the communication unit informs the magnetic field signal detection unit 5 provided on the self-propelled equipment 3 to begin a detection procedure, thereby enhancing the detecting accuracy. Of course, a power supply unit 7 which powers the system correspondingly, as well as various sensor units is also comprised.

The above description is only a preferred implementation of the invention. The scope of protection of the invention is not limited to the above embodiments, and technical solutions falling within the idea of the invention all are within the scope of protection of the invention. It should be pointed out that many improvements and modifications may be made by those of ordinary skill in the art, without departing from the principle of the invention. All such improvements and modifications are also to be considered within the scope of protection of the invention.

## Claims

1. A system for determining a working range of a self-propelled equipment (3), comprising a signal generating device (1), a closed-loop wire (2) for enclosing the working range, such that by galvanizing the wire, magnetic field signals will be produced in areas inside and outside the working range delimited by the closed-loop wire, and the self-propelled equipment (3),
the self-propelled equipment (3) comprises a drive unit (6), a control unit (4) and at least one magnetic field signal detection unit (5) provided on its body, wherein the at least one magnetic field signal detection unit (5) outputs a detection signal according to the intensity and direction of a detected magnetic field, wherein the control unit (4) receives the detection signal and controls the self-propelled equipment (3) to act according to the detection signal;
the signal generating device (1) comprises a pulse signal generator, wherein the pulse signal generator provides pulse signals to the wire (2) to produce pulse magnetic fields in the range enclosed by the wire (2);
the pulse signals are pseudo-random pulse signals;
**characterized in that**
the pulse signal generator provides pulse signals of fixed pulse width, the pulse width of the pulse signals being less than a time interval between two of them, wherein the pseudo-random pulse signals are unipolar pulse signals.

2. The system for determining the working range of the self-propelled equipment according to Claim 1, **characterized in that** the magnetic field signal detection unit (5) comprises a detection element for detecting the magnetic fields, wherein the detection element responds to a variation between the magnetic fields in areas inside and outside the working range of the self-propelled equipment (3) and outputs a signal generated by the signal detection unit (5).

3. The system for determining the working range of the self-propelled equipment according to Claim 2, **characterized in that** the detection element is inductive.

4. The system for determining the working range of the self-propelled equipment according to Claim 2, **characterized in that** the magnetic field signal detection unit (5) comprises boundary line inside/outside detection modules for determining whether the self-propelled equipment (3) is within its working range, wherein the boundary line inside/outside detection modules respond to the signal generated by the signal detection unit (5) and output the detection signal according to a waveform and amplitude of the signal generated by the signal detection unit (5).

5. The system for determining the working range of the self-propelled equipment according to Claim 4, **characterized in that** the boundary line inside/outside detection modules comprise two sets of comparators, wherein the two sets of comparators are set to a different threshold respectively and used to compare the signal generated by the signal detection unit (5) with the threshold to obtain the detection signal, the detection signal being output to a main control unit (MCU) for signal processing.

6. The system for determining the working range of the self-propelled equipment according to Claim 1, **characterized in that** the detection signal enters the control unit (4) via a gain controllable amplification circuit.

7. The system for determining the working range of the self-propelled equipment according to Claim 1, **characterized in that** the pulse signal generator comprises a pseudo-random pulse signal generating module (8) and a constant current module (9) for fixing the amplitude of the pseudo-random pulse signals.

8. The system for determining the working range of the self-propelled equipment according to Claim 1, **characterized in that** the pulse signal generator comprises a wire on/off detection module (10) for detecting an on/off state of the wire (2), wherein the wire on/off detection module (10) comprises a receiving end coupled with the wire, wherein the receiving end inputs wire pulse signals into a main control unit (MCU), which determines the on/off state of the wire (2) by comparing the received wire pulse signals with the pulse signals generated by the pulse signal generator.

## Patentansprüche

1. System zur Bestimmung eines Arbeitsbereichs einer selbstfahrenden Vorrichtung (3), das eine Signalerzeugungseinrichtung (1), eine geschlossene Drahtschleife (2), um den Arbeitsbereich derart zu umschließen, dass durch Galvanisieren des Drahts Magnetfeldsignale in Bereichen innerhalb und außerhalb des Arbeitsbereichs, der von der geschlossenen Drahtschleife begrenzt ist, erzeugt werden, und die selbstfahrende Vorrichtung (3) umfasst,
wobei die selbstfahrende Vorrichtung (3) eine Antriebseinheit (6), eine Steuereinheit (4) und mindestens eine Magnetfeldsignal-Erfassungseinheit (5) umfasst, die auf ihrem Körper angeordnet sind, wobei die mindestens eine Magnetfeldsignal-Erfassungseinheit (5) ein Erfassungssignal entsprechend der Intensität und Richtung eines erfassten Magnetfelds ausgibt, wobei die Steuereinheit (4) das Erfassungssignal empfängt und die selbstfahrende Vorrichtung (3) ansteuert, gemäß dem Erfassungssignal zu agieren;
wobei die Signalerzeugungseinrichtung (1) einen Impulssignalgenerator umfasst, wobei der Impulssignalgenerator dem Draht (2) Impulssignale zuführt, um in dem Bereich, der durch den Draht (2) umschlossen ist, Impulsmagnetfelder zu erzeugen;
wobei die Impulssignale pseudozufällige Impulssignale sind;
**dadurch gekennzeichnet, dass**
der Impulssignalgenerator Impulssignale fester Impulsbreite bereitstellt, wobei die Impulsbreite der Impulssignale kleiner ist als ein Zeitintervall zwischen zweien von ihnen, wobei die pseudozufälligen Impulssignale unipolare Impulssignale sind.

2. System zur Bestimmung des Arbeitsbereichs der selbstfahrenden Vorrichtung nach Anspruch 1, **dadurch gekennzeichnet, dass** die Magnetfeldsignal-Erfassungseinheit (5) ein Erfassungselement zum Erfassen der Magnetfelder umfasst, wobei das Erfassungselement auf eine Abweichung zwischen den Magnetfeldern in Bereichen innerhalb und außerhalb des Arbeitsbereichs der selbstfahrenden Vorrichtung (3) reagiert und ein Signal ausgibt, das von der Signalerfassungseinheit (5) erzeugt wird.

3. System zur Bestimmung des Arbeitsbereichs der selbstfahrenden Vorrichtung nach Anspruch 2, **dadurch gekennzeichnet, dass** das Erfassungselement induktiv ist.

4. System zur Bestimmung des Arbeitsbereichs der selbstfahrenden Vorrichtung nach Anspruch 2, **dadurch gekennzeichnet, dass** die Magnetfeldsignal-Erfassungseinheit (5) Erfassungsmodule der Begrenzungslinien-Innen-/- Außenseite zum Bestimmen, ob sich die selbstfahrende Vorrichtung (3) innerhalb ihres Arbeitsbereichs befindet, umfasst, wobei die Erfassungsmodule der Begrenzungslinien-Innen-/-Außenseite auf das Signal, das von der Signalerfassungseinheit (5) erzeugt wird, reagieren und das Erfassungssignal entsprechend einer Wellenform und Amplitude des Signals, das von der Signalerfassungseinheit (5) erzeugt wird, ausgeben.

5. System zur Bestimmung des Arbeitsbereichs der selbstfahrenden Vorrichtung nach Anspruch 4, **dadurch gekennzeichnet, dass** die Erfassungsmodule der Grenzlinien-Innen-/-Außenseite zwei Sätze von Komparatoren umfassen, wobei die beiden Sätze von Komparatoren jeweils auf einen unterschiedlichen Schwellenwert eingestellt sind und verwendet werden, um das Signal, das von der Signalerfassungseinheit (5) erzeugt wird, mit dem Schwellenwert zu vergleichen, um das Erfassungssignal zu erhalten, wobei das Erfassungssignal zur Signalverarbeitung an eine Hauptsteuereinheit (MCU) ausgegeben wird.

6. System zur Bestimmung des Arbeitsbereichs der selbstfahrenden Vorrichtung nach Anspruch 1, **dadurch gekennzeichnet, dass** das Erfassungssignal in die Steuereinheit (4) über eine verstärkungssteuerbare Verstärkungsschaltung eintritt.

7. System zur Bestimmung des Arbeitsbereichs der selbstfahrenden Vorrichtung nach Anspruch 1, **dadurch gekennzeichnet, dass** der Impulssignalgenerator ein Erzeugungsmodul (8) pseudozufälliger Impulssignale und ein Konstantstrom-Modul (9) zum Festlegen der Amplitude der pseudozufälligen Impulssignale umfasst.

8. System zur Bestimmung des Arbeitsbereichs der selbstfahrenden Vorrichtung nach Anspruch 1, **dadurch gekennzeichnet, dass** der Impulssignalgenerator ein Ein/Aus-Erfassungsmodul (10) des Drahtes zum Erfassen eines Ein/Aus-Zustands des Drahtes (2) umfasst, wobei das Ein/Aus-Erfassungsmodul (10) des Drahtes ein Empfangsende umfasst, das mit dem Draht verbunden ist, wobei das Empfangsende Drahtimpulssignale in eine Hauptsteuereinheit (MCU) einspeist, die den Ein/Aus-Zustand des Drahtes (2) durch Vergleichen der empfangenen Drahtimpulssignale mit den Impulssignalen, die von dem Impulssignalgenerator erzeugt werden, bestimmt.

## Revendications

1. Système de détermination d'une plage de fonctionnement d'un équipement autopropulsé (3), comprenant un dispositif de génération de signal (1), un fil en boucle fermée (2) pour renfermer la plage de fonctionnement, de sorte que en galvanisant le fil, des signaux de champ magnétique seront produits dans des zones à l'intérieur et à l'extérieur de la plage de fonctionnement délimitée par le fil en boucle fermée et l'équipement autopropulsé (3),
l'équipement autopropulsé (3) comprend une unité d'entraînement (6), une unité de commande (4) et au moins une unité de détection de signal de champ magnétique (5) prévue sur son corps, dans lequel au moins une unité de détection de signal de champ magnétique (5) émet un signal de détection selon l'intensité et la direction d'un champ magnétique détecté, dans lequel l'unité de commande (4) reçoit le signal de détection et commande l'équipement autopropulsé (3) afin d'agir selon le signal de détection ;
le dispositif de génération de signal (1) comprend un générateur de signal d'impulsion, dans lequel le générateur de signal d'impulsion fournit des signaux d'impulsion au fil (2) pour produire des champs magnétiques d'impulsion dans la plage renfermée par le fil (2) ;
les signaux d'impulsion sont des signaux d'impulsion pseudo aléatoires ;
**caractérisé en ce que**
le générateur de signaux d'impulsion fournit des signaux d'impulsion d'une largeur d'impulsion fixe, la largeur d'impulsion des signaux d'impulsion étant inférieure à un intervalle de temps entre deux d'entre eux, dans lequel les signaux d'impulsion pseudo aléatoires sont des signaux d'impulsion unipolaires.

2. Système de détermination de la plage de fonctionnement de l'équipement autopropulsé selon la revendication 1, **caractérisé en ce que** l'unité de détection de signal de champ magnétique (5), comprend un élément de détection pour détecter les champs magnétiques, dans lequel l'élément de détection répond à une variation entre les champs magnétiques dans des zones à l'intérieur et extérieur de la plage de fonctionnement de l'équipement autopropulsé (3) et émet un signal généré par l'unité de détection de signal (5).

3. Système de détermination de la plage de fonctionnement de l'équipement autopropulsé selon la revendication 2, **caractérisé en ce que** l'élément de détection est inductif.

4. Système de détermination de la plage de fonctionnement de l'équipement autopropulsé selon la revendication 2, **caractérisé en ce que** l'unité de détection de signal de champ magnétique (5) comprend des modules de détection à l'intérieur/à l'extérieur d'une ligne de limite pour déterminer si l'équipement autopropulsé (3) est à l'intérieur de sa plage de fonctionnement, dans lequel le module de détection à l'intérieur/à l'extérieur de la ligne de limite répond au signal généré par l'unité de détection du signal (5) et émet le signal de détection selon une forme d'onde et l'amplitude du signal généré par l'unité de détection de signal (5).

5. Système de détermination de la plage de fonctionnement de l'équipement autopropulsé selon la revendication 4, **caractérisé en ce que** les modules de détection à l'intérieur/à l'extérieur de la ligne de limite comprennent deux ensembles de comparateur, dans lequel les deux ensemble de comparateur sont réglés sur un seuil différent respectivement et utilisés pour comparer le signal généré par l'unité de détection de signal (5) avec le seuil pour obtenir le signal de détection, le signal de détection étant émis vers une unité de commande principale (MCU) en vue d'un traitement de signal.

6. Système de détermination de la plage de fonctionnement de l'équipement autopropulsé selon la revendication 1, **caractérisé en ce que** le signal de détection entre dans l'unité de commande (4) via un circuit d'amplification qui peut être commandé par le gain.

7. Système de détermination de la plage de fonctionnement de l'équipement autopropulsé selon la revendication 1, caractérisé en ce le générateur de signal d'impulsion comprend un module de génération de signal d'impulsion pseudo aléatoire (8) et un module à courant constant (9) pour fixer l'amplitude des signaux d'impulsion pseudo aléatoires.

8. Système de détermination de la plage de fonctionnement de l'équipement autopropulsé selon la revendication 1, caractérisé en ce le générateur de signal d'impulsion comprend un module de détection de file conducteur/bloqué (10) pour détecter un état conducteur/bloqué du fil (2), dans lequel le module de détection de fil conducteur/bloqué (10) comprend une extrémité de réception couplée au fil, dans lequel l'extrémité de réception entre les signaux d'impulsion de fil dans une unité de commande principale (MCU) qui détermine l'état conducteur/bloqué du fil (2) en comparant les signaux d'impulsion de fil reçus avec les signaux d'impulsion générés par le générateur de signal d'impulsion.
